(19) Europäisches Patentamt
European Patent Office
Office européen des brevets

(11) EP 4 101 645 A1

(12) # EUROPEAN PATENT APPLICATION
published in accordance with Art. 153(4) EPC

(43) Date of publication:
**14.12.2022 Bulletin 2022/50**

(21) Application number: **21750159.2**

(22) Date of filing: **03.02.2021**

(51) International Patent Classification (IPC):
***B32B 27/30*** *(2006.01)* ***B29C 51/02*** *(2006.01)*
***B32B 27/36*** *(2006.01)*

(52) Cooperative Patent Classification (CPC):
**B29C 51/02; B32B 27/30; B32B 27/36**

(86) International application number:
**PCT/JP2021/003819**

(87) International publication number:
**WO 2021/157588 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.02.2020 JP 2020019944**

(71) Applicant: **MITSUBISHI GAS CHEMICAL COMPANY, INC.**
**Chiyoda-ku**
**Tokyo 100-8324 (JP)**

(72) Inventors:
- **FUKUNAGA Yasutaka**
  **Toyonaka-shi, Osaka 561-0823 (JP)**
- **KAMEI Shota**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **THERMOFORMING LAMINATE AND METHOD FOR MOLDING LAMINATE**

(57) Provided is a thermoforming laminate, etc., having good thermoforming properties as well as excellent chemical resistance and abrasion resistance. Examples of solutions to the problem include a thermoformable laminate, comprising: (a) a substrate layer containing a thermoplastic resin; (b) a post-cure type hard coat layer containing an active-energy-ray-curable resin having a (meth)acryloyl group, the hard coat layer also containing a polymerization inhibitor; and (c) a protective film, wherein: (a) the substrate layer, (b) the hard coat layer, and (c) the protective film are layered in this order; and the polymerization inhibitor comprises at least one among a quinone-based compound, a sulfur-containing compound, and a nitrogen-containing compound.

EP 4 101 645 A1

## Description

### TECHNICAL FIELD

The present invention relates to a thermoformable laminate and a method for forming the thermoformable laminate.

### BACKGROUND ART

Coating has been a commonly employed procedure for formed plastic items used in household appliances and automotive components, but due to its high environmental burden, an insert molding technique that uses a thermoformable decorative film has also been employed. Recently, because of the increasing requirements for chemical resistance and scratch resistance, there is a great need for thermoformable films that are provided with a hard coat. Thermoformable films that are provided with a hard coat are generally produced by applying a hard coat liquid to a substrate, and subjecting the resultant to UV curing.

There is a trade-off relationship between formability and chemical resistance and scratch resistance. Specifically, improvement of formability usually results in deterioration of chemical resistance and scratch resistance, whereas improvement of chemical resistance and scratch resistance usually results in deterioration of formability. Therefore, in order to solve these problems, post-cure type films have been suggested. The post-cure type films that have been applied with a hard coat are subjected to forming without being cured and later cured by UV irradiation or the like.

Some of the post-cure type thermoformable hard coat films are covered with a protective film in order to prevent scratches and foreign substances from getting trapped. Since the yield rate is greatly decreased if foreign substances are trapped during the forming process, hard coat films are desirably formed in a clean environment while it is covered with the protective film.

Thermoforming, however, requires heat softening at a temperature higher than or equal to Tg of the substrate of the hard coat film. Therefore, when a conventional post-cure type hard coat film is heated while being covered with a protective film, curing proceeds, which greatly deteriorates the thermoformability.

Moreover, when a conventional post-cure type hard coat film is subjected to thermoforming while being covered with a protective film, the pattern of the protective film may transfer to the film and deteriorate the appearance.

For these reasons, conventional hard coat films are generally subjected to forming after peeling off the protective film.

Thus, it has been difficult to produce a formed item having excellent chemical resistance, scratch resistance and the like, by thermoforming a thermoformable hard coat film covered with a protective film while ensuring thermoformability of the film and preventing deterioration of the appearance of the film.

### PRIOR ART DOCUMENTS

### PATENT DOCUMENTS

Patent literature 1: Japanese Unexamined Patent Application Publication (translation of PCT) No. 2017-508828

### SUMMARY OF THE INVENTION

### PROBLEM TO BE SOLVED BY THE INVENTION

A main objective of the present invention is to provide a thermoformable laminate which has good thermoformability and excellent chemical resistance, abrasion resistance, and else.

### MEANS FOR SOLVING THE PROBLEM

The present invention includes the followings.

(1) A thermoformable laminate, comprising:

(a) a substrate layer comprising a thermoplastic resin;
(b) a post-cure type hard coat layer comprising an active-energy-ray-curable resin having a (meth)acryloyl group, the hard coat layer also containing a polymerization inhibitor; and
(c) a protective film,

wherein (a) the substrate layer, (b) the hard coat layer, and (c) the protective film are layered in this order; and the polymerization inhibitor contains at least one among a quinone-based compound, a sulfur-containing compound, and a nitrogen-containing compound.

(2) The thermoformable laminate according to (1) above, wherein the polymerization inhibitor comprises a quinone-based compound selected from 2-hydroxynaphthoquinone, N-isopropyl-N'-phenyl-p-phenylenediamine, 6-ethoxy-2,2,4-trimethyl-1,2-dihydroquinoline, 2,2,6,6-tetramethyl-4-oxopiperidine-1-oxyl, phenothiazine, and 2-mercaptobenzimidazole.
(3) The thermoformable laminate according to (2) above, wherein the polymerization inhibitor comprises a quinone-based compound selected from N-isopropyl-N'-phenyl-p-phenylenediamine, phenothiazine, and 2,2,6,6-tetramethyl-4-oxopiperidine-1-oxyl.
(4) The thermoformable laminate according to any one of (1) to (3) above, wherein the hard coat layer comprises the polymerization inhibitor in an amount of 0.0001-5 wt%.
(5) The thermoformable laminate according to any one of (1) to (4) above, wherein the active-energy-ray-curable resin having a (meth)acryloyl group has a (meth)acrylate backbone.
(6) The thermoformable laminate according to any one of (1) to (5) above, wherein the hard coat layer comprises nanoparticles.
(7) The thermoformable laminate according to any one of (1) to (6) above, wherein the hard coat layer comprises a leveling agent.
(8) The thermoformable laminate according to any one of (1) to (7) above, wherein an adhesive surface of the protective film that is a surface on the side facing toward the hard coat layer, has a surface free energy of 30.0 (mN/m) or higher before it is adhered to the hard coat layer, as calculated by OWRK method from an average contact angle of water and an average contact angle of diiodomethane.
(9) The thermoformable laminate according to any one of (1) to (8) above, wherein the adhesive surface of the protective film has a surface roughness Sa of 0.1 μm or less.
(10) The thermoformable laminate according to any one of (1) to (9) above, wherein the hard coat layer is UV curable.
(11) The thermoformable laminate according to any one of (1) to (10) above, wherein the thermoplastic resin contains an aromatic polycarbonate.
(12) The thermoformable laminate according to (11) above, wherein the aromatic polycarbonate contains a bisphenol-A-based polycarbonate.
(13) The thermoformable laminate according to any one of (1) to (12) above, wherein the substrate layer comprises at least two layers, namely, an acrylic resin layer and an aromatic polycarbonate layer.
(14) A method for forming a thermoformable laminate, the method comprising a thermoforming step in which the thermoformable laminate according to any one of (1) to (13) above is heated while the protective film is adhered to the laminate.
(15) A formed item obtained by forming the thermoformable laminate according to any one of (1) to (13) above.
(16) An article obtained by irradiating the formed item according to (15) above with an active energy ray.

ADVANTAGEOUS EFFECT OF THE INVENTION

In a thermoformable laminate of the present invention, a curable hard coat layer disposed between a substrate layer and a protective film contains a polymerization inhibitor. Such a thermoformable laminate can avoid curing of the hard coat layer during thermoforming even if the hard coat layer is covered with the protective film, and thus can realize good workability. The thermoformable laminate can also avoid contamination of the hard coat layer caused by fine foreign substances, and thus can have good surface appearance. Hence, such a thermoformable laminate is particularly favorable for a thermoforming process that is performed while the protective film is still covering the laminate.
Furthermore, once the thermoformable laminate is thermoformed into a predetermined shape and cured, the protective film can be removed therefrom to give a resin film laminate having a hard coat layer with a highly chemical resistant and highly abrasion resistant surface.
The thermoformable laminate of the present invention having such superior characteristics is particularly advantageous as a material of a resin film laminate that is used for mobile devices, automotive interior parts or the like.

BREIF DESCRIPTION OF DRAWINGS

Figure 1: A cross-sectional view showing a specific example of a thermoformable laminate.

## EMBODIMENTS FOR CARRYING OUT THE INVENTION

Hereinafter, the present invention will be described in detail. The present invention is not limited to the following embodiments, and may be modified in any way as long as the effect of the invention is achieved.

### [Thermoformable Laminate]

A thermoformable laminate of the present invention includes (a) a substrate layer containing a thermoplastic resin, (b) a curable hard coat layer, and (c) a protective film, wherein these layers, namely, (a) the substrate layer, (b) the hard coat layer, and (c) the protective film, are stacked in this order. Specifically, the laminates of the present invention not only include laminates which have (a) the substrate layer and (c) the protective film that are directly layered on the respective sides of (b) the hard coat layer, but also include laminates which include a layer in addition to the layers (a) to (c).

The thermoformable laminate has, for example, a structure shown in Figure 1. In a laminate 10 shown in Figure 1, an outermost protective film 12 is layered on a hard coat layer 16. Accordingly, the surface of the hard coat layer 16 on the protective film 12 side is protected by the protective film 12. The hard coat layer 16 is layered on a substrate layer which has, for example, a polymethyl methacrylate layer (PMMA resin layer) 20 and a polycarbonate layer (PC resin layer) 22. Specifically, the hard coat layer 16 is layered on the surface of the PMMA layer.

Hereinafter, the layers of the thermoformable laminate will be described one by one.

### [Substrate Layer]

The substrate layer is preferably layered on a surface of the hard coat layer on the other side from the protective film. Note that an additional layer may be disposed between the substrate layer and the hard coat layer.

The substrate layer contains a thermoplastic resin. The kind of the thermoplastic resin is not particularly limited, and any kind of resin including a polycarbonate (PC) resin, an acrylic resin such as a polymethyl methacrylate (PMMA), polyethylene terephthalate (PET), triacetylcellulose (TAC), polyethylene naphthalate (PEN), polyimide (PI), a cyclic olefin copolymer (COC), a norbornene-based resin, polyethersulfone, cellophane, aromatic polyamide, and the like can be used. Among these choices, the thermoplastic resin of the substrate layer preferably contains at least a polycarbonate resin. More preferably, an aromatic polycarbonate is used in terms of toughness and heat resistance.

While the kind of the polycarbonate resin contained in the substrate layer is not particularly limited as long as it contains a -[O-R-OCO]- unit that has a carbonate bond in the main chain of the molecule (where R contains an aliphatic group, an aromatic group, or both of an aliphatic group and an aromatic group, and has a linear structure or a branched structure), it is preferably a polycarbonate that has a bisphenol backbone or the like, and particularly preferably a bisphenol-A-based polycarbonate that has a bisphenol A backbone, or a bisphenol-C-based polycarbonate that has a bisphenol C backbone. The polycarbonate resin may be a mixture or a copolymer of bisphenol A and bisphenol C. A bisphenol-C-based polycarbonate resin, for example, a polycarbonate resin composed solely of bisphenol C, or a polycarbonate resin composed of a mixture or a copolymer of bisphenol C and bisphenol A, can be used to enhance the hardness of the substrate layer.

Furthermore, the viscosity average molecular weight of the thermoplastic resin, for example, a polycarbonate resin is preferably 15,000-40,000, more preferably 20,000-35,000, and still more preferably 22,500-25,000.

Preferably, the substrate layer further contains an acrylic resin. While the acrylic resin contained in the substrate layer is not particularly limited, examples thereof include a homopolymer of various (meth)acrylic acid esters as typified by polymethyl methacrylate (PMMA) and methyl methacrylate (MMA), a copolymer of PMMA or MMA and at least one other monomer, and a mixture of a multiple kinds of these resins. Among them, a (meth)acrylate having a cyclic alkyl structure with low birefringence, low moisture absorption, and excellent heat resistance is favorable. Examples of such a (meth)acrylic resin include, but not limited to, ACRYPET (manufactured by Mitsubishi Rayon Co., Ltd.), DELPET (manufactured by Asahi Kasei Chemicals Corp.), and PARAPET (manufactured by Kuraray Co., Ltd.).

The substrate layer may also be a multilayer body including the aforementioned polycarbonate resin layer and the aforementioned acrylic resin layer. Accordingly, in a case where the substrate layer is a multilayer body including at least two layers, for example, an acrylic resin layer and an aromatic polycarbonate layer, the hard coat layer is preferably provided on the acrylic resin side. A multilayer body including a polycarbonate resin and an acrylic resin can be used to maintain thermoformability of the substrate and improve the surface hardness at the same time.

In addition, the substrate layer may contain an additive as a component besides the thermoplastic resin, where examples of the additive include at least one selected from the group consisting of a heat stabilizer, an antioxidant, a flame retardant, a flame retardant auxiliary agent, a UV absorber, a mold release agent and a colorant. Furthermore, an antistatic agent, a fluorescent brightener, an antifog agent, a fluidity improving agent, a plasticizer, a dispersant, an antibacterial agent or the like may also be added to the substrate layer.

The thermoplastic resin is contained in the substrate layer in an amount of preferably 80% or more by mass,

more preferably 90% or more by mass, and particularly preferably 95% or more by mass. Furthermore, the polycarbonate resin is contained in the thermoplastic resin of the substrate layer in an amount of preferably 80% or more by mass, more preferably 90% or more by mass, and particularly preferably 95% or more by mass.

The acrylic resin is contained in the acrylic resin-based layer of the substrate layer in an amount of preferably 80% or more by mass, more preferably 90% or more by mass, and particularly preferably 95% or more by mass.

While the thickness of the substrate layer is not particularly limited, it is preferably 0.10 mm to 1.0 mm. The thickness of the substrate layer is, for example, 0.15 mm to 0.80 mm, 0.18 mm to 0.60 mm, or 0.25 mm to 0.40 mm.

In a case where the substrate layer has multiple layers, either the thickness of each layer or the thickness of the substrate layer as a whole may lie within the above-mentioned range.

[Hard Coat Layer]

The hard coat layer contains a polymerization inhibitor and an active-energy-ray-curable resin. Such an energy-ray-curable hard coat layer is curable without a curing agent. Note that the hard coat layer may contain a photopolymerization initiator, and various further additives to improve the function of the hard coat layer.

<Polymerization inhibitor>

A hard coat composition that forms the hard coat layer contains a polymerization inhibitor. The polymerization inhibitor inhibits polymerization of the active-energy-ray-curable resin to be induced by light and heat, thereby improving storage stability.

As will be described later, the polymerization inhibitor used in the hard coat layer of the laminate of the present invention may be an aromatic hydroxy compound, a quinone-based compound, a nitrogen-containing compound, a sulfur-based compound, or the like.

Examples of the aromatic hydroxy compound include a phenol such as hydroquinone and p-methoxyphenol (4-methoxyphenol), a cresol, t-butylcatechol, a di(t-butyl)hydroxytoluene such as 3,5-di-t-butyl-4-hydroxytoluene, 2,2'-methylenebis(4-methyl-6-t-butylphenol), 2,2'-methylenebis(4-ethyl-6-butylphenol), and 4,4'-thiobis(3-methyl-6-t-butylphenol).

Examples of the quinone-based compound include benzoquinone, naphthoquinone, 2-t-butyl-1,4-benzoquinone, and 2-hydroxynaphthoquinone.

Examples of the nitrogen-containing compound include an amine-based compound and a nitroso compound, where examples of the amine-based compound include p-phenylenediamine, 4-aminodiphenylamine, N,N'-diphenyl-p-phenylenediamine, N-isopropyl-N'-phenyl-p-phenylenediamine, N-(1,3-dimethylbutyl)-N'-phenyl-p-phenylenediamine, N,N'-di-2-naphthyl-p-phenylenediamine, diphenylamine, N-phenyl-β-naphthylamine, 4,4'-dicumyl-diphenylamine, 4,4'-dioctyl-diphenylamine, and 6-ethoxy-2,2,4-trimethyl-1,2-dihydroquinoline.

Examples of the nitroso compound include N-nitrosodiphenylamine, N-nitrosophenylnaphthylamine, N-nitrosodinaphthylamine, p-nitrosophenol, nitrosobenzene, p-nitrosodiphenylamine, and α-nitroso-β-naphthol.

Furthermore, examples of the nitrogen-containing compound other than those mentioned above include nitroxides such as piperidine-1-oxyl, pyrrolidine-1-oxyl, 2,2,6,6-tetramethyl-4-oxopiperidine-1-oxyl, and 2,2,6,6-tetramethylpiperidine-1-oxyl. These nitrogen-containing compounds serve as a radical scavenger.

Examples of the sulfur-based compound include phenothiazine, distearyl thiodipropionate, and 2-mercaptobenzimidazole.

Examples of other polymerization inhibitor include transition metal salts, for example, copper salt compounds, and manganese salt compounds. Examples of such compounds include copper salts such as a copper dialkyl dithiocarbamate (where the alkyl groups may be any of a methyl group, an ethyl group, a propyl group, or a butyl group, which are either the same or different), copper acetate, copper salicylate, copper thiocyanate, copper nitrate, copper chloride, copper carbonate, copper hydroxide, or copper acrylate; and manganese salts such as a manganese dialkyl dithiocarbamate (where the alkyl groups may be any of a methyl group, an ethyl group, a propyl group, or a butyl group, which are either the same or different), manganese diphenyl dithiocarbamate, manganese formate, manganese acetate, manganese octanoate, manganese naphthenate, manganese permanganate, and manganese salt of ethylenediaminetetraacetic acid.

Among these polymerization inhibitors, a quinone-based compound, a nitrogen-containing compound, or a sulfur-based compound is favorable. Since these polymerization inhibitors are active even without oxygen, they can effectively inhibit polymerization curing induced by heat during a thermoforming process performed while the laminate is covered with the protective film.

Specifically, the polymerization inhibitor is preferably phenothiazine, 2-hydroxynaphthoquinone, N-isopropyl-N'-phenyl-p-phenylenediamine, 6-ethoxy-2,2,4-trimethyl-1,2-dihydroquinoline, 2,2,6,6-tetramethyl-4-oxopiperidine-1-oxyl, 2-mercaptobenzimidazole, or the like, and particularly preferably phenothiazine, N-isopropyl-N'-phenyl-p-phenylenediamine, 2,2,6,6-tetramethyl-4-oxopiperidine-1-oxyl, or the like.

The amount of the polymerization inhibitor added is preferably 0.0001-5 wt%, more preferably 0.0003-1 wt%, still more preferably 0.0005-0.5 wt%, and particularly preferably 0.001-0.1 wt% (10-1,000 ppm by weight), relative to the total weight of the hard coat composition that forms the hard coat layer. Addition of the polymerization inhibitor in an excessive amount could adversely affect the physical property of the hard coat layer, or could cause coloring. On the other hand, if the amount of the polymerization inhibitor added is too small, curing of the hard coat layer proceeds by heating and it may not prevent deterioration of thermoformability.

<Active-energy-ray-curable resin>

Any compound that is curable by an active energy ray can be used as the active-energy-ray-curable resin. A (meth)acrylate compound (a (meth)acrylate polymer, or a (meth)acrylate resin) having a (meth)acryloyl group can favorably be used as the active-energy-ray-curable compound. A (meth)acrylate compound having a (meth)acryloyl group preferably has a (meth)acrylate backbone. Examples of the (meth)acrylate compound include an epoxy (meth)acrylate, a urethane (meth)acrylate, and a polyester (meth)acrylate. These active-energy-ray-curable resins are also available from manufacturers.

- Epoxy (meth)acrylate

Among the aforementioned active-energy-ray-curable compounds, an epoxy (meth)acrylate derived from an epoxy compound is favorable. An exemplary synthesis of an epoxy (meth)acrylate is represented by Formula (1) below. An epoxy (meth)acrylate can be obtained by adding an acrylic acid or a methacrylic acid having an unsaturated bond to an epoxy compound.

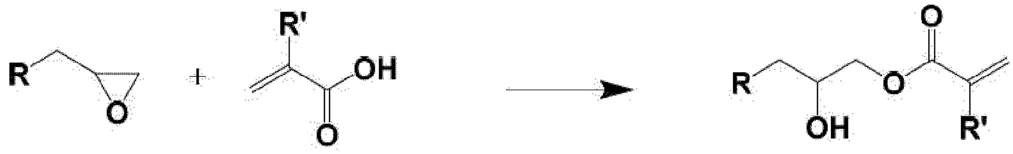
(1)

(In Formula (1), each of R is hydrogen or an alkyl group with a total carbon number of 1-12 which may contain at least one substituent among an epoxy group, a hydroxy group, an acryloyl group, and a methacryloyl group; and R' is a methyl group or hydrogen).

An epoxy (meth)acrylate having a (meth)acrylate backbone can be obtained, for example, by synthesizing an epoxy compound having a (meth)acrylate backbone by copolymerization of a (meth)acrylic acid and a glycidyl ether (meth)acrylate, and adding an acrylic acid or a methacrylic acid to this compound. An exemplary synthesis is represented by Formula (2).

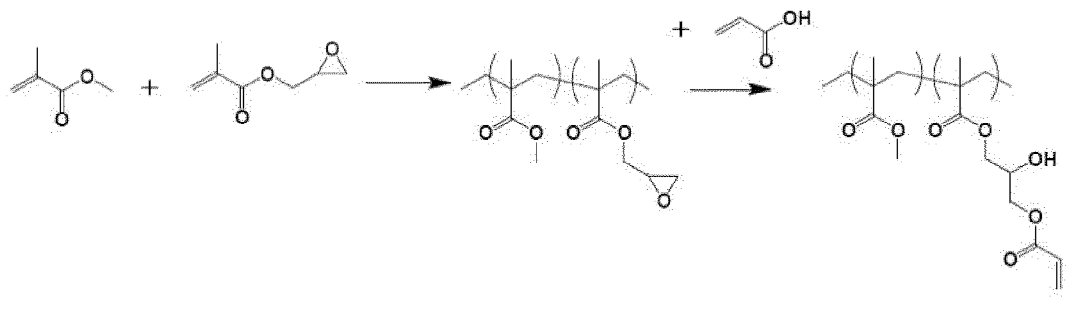
(2)

Examples of the epoxy (meth)acrylate used in the hard coat composition include those having a repeat unit represented by Formula (I) below.

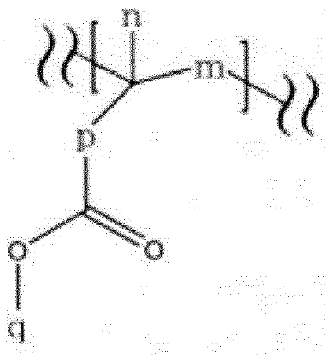

(I)

In Formula (I), m represents a C1-C4 alkylene group or a single bond, n represents a C1-C4 alkyl group or hydrogen, p represents a single bond or a C1 or C2 alkylene group, q represents hydrogen or an alkyl group with a total carbon number of 1-12 which may contain at least one substituent among an epoxy group, a hydroxy group, an acryloyl group, and a methacryloyl group.

More preferably, the epoxy (meth)acrylate polymer contains a repeat unit represented by Formula (I) above, where m represents a C1 or C2 alkylene group, n represents a C1 or C2 alkyl group, p represents a single bond or a methylene group, and q represents hydrogen or an alkyl group with a total carbon number of 1-6 which may contain at least one substituent among a glycidyl group, a hydroxy group, and an acryloyl group.

For example, in Formula (I) above, m represents a methylene group, n represents a methyl group, p represents a single bond, and q represents a C5 or less alkyl group containing a methyl group and a glycidyl group (an epoxy group), or a C8 or less alkyl group containing a hydroxy group and an acryloyl group, or the like.

Specific examples of the repeat unit contained in the epoxy (meth)acrylate polymer include those represented by Formulae (II-a), (II-b), and (II-c) below.

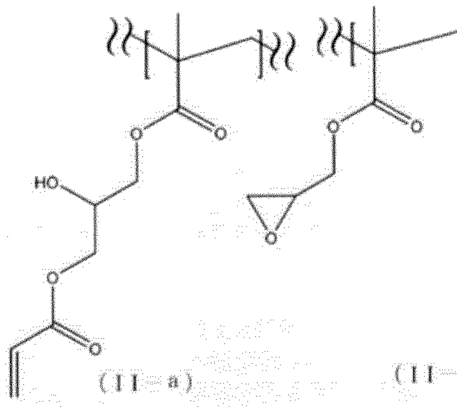

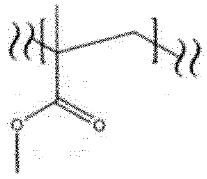

(II-a) (II-b) (II-c)

The repeat unit represented by Formula (II-a) above is contained in the epoxy (meth)acrylate polymer in an amount of preferably 30-85 mol% and more preferably 40-80 mol%, relative to the total number of moles of the repeat units represented by Formulae (II-a), (II-b) and (II-c) above. The content of the repeat unit represented by Formula (II-b) above is preferably 5-30 mol% and more preferably 10-25 mol%, relative to the aforementioned total number of moles. Moreover, the content of the repeat unit represented by Formula (II-c) above is preferably 10-40 mol% and more preferably 10-35 mol%, relative to the aforementioned total number of moles.

Moreover, the mole ratio among the repeat units represented by Formulae (II-a), (II-b), and (II-c) above is preferably, 4.5 to 5.5:1.5 to 2.5:2.5 to 3.5, for example, 5:2:3.

- Urethane (meth)acrylate

The following urethane (meth)acrylates can be used as the active-energy-ray-curable resin having a (meth)acryloyl group described above.

(Urethane acrylate containing molecular structure with cyclic backbone)

The urethane acrylate resin is preferably a urethane acrylate containing a molecular structure with a cyclic backbone. More specifically, specific examples of a favorable urethane acrylate include a polymer of an isocyanate compound and an acrylate compound, which has a cyclic backbone. The urethane acrylate resin which has a molecular structure with a cyclic backbone is preferably curable by an active-energy-ray.

Isocyanate compound

The isocyanate compound may be, for example, an aromatic isocyanate which may have an alkyl group such as a methyl group as a substituent, preferably an aromatic isocyanate with a total carbon number of 6-16, more preferably an aromatic isocyanate with a total carbon number of 7-14, and particularly preferably an aromatic isocyanate with a total carbon number of 8-12.

While this isocyanate compound is preferably an aromatic isocyanate, it may also be an aliphatic isocyanate, an alicyclic isocyanate, or the like.

Examples of a preferable structural unit of the urethane (meth)acrylate include: a polyisocyanate such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethyl hexamethylene diisocyanate, tetramethyl xylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; a trimer or tetramer compound of such polyisocyanates; a biuret polyisocyanate; a water-dispersed polyisocyanate (for example, "AQUANATE 100", "AQUANATE 110", "AQUANATE 200", "AQUANATE 210", etc. manufactured by Nippon Polyurethane Industry Co., Ltd.); and a reaction products of such polyisocyanates and polyols.

Specific examples of a preferable isocyanate compound among these isocyanate compounds include diphenylmethane diisocyanate, toluene diisocyanate, naphthalene diisocyanate, a trimethylolpropane (TMP) adduct of toluene diisocyanate, a TMP adduct of xylene diisocyanate, as well as dicyclohexyl methane diisocyanate (H12MDI), isophorone diisocyanate (IPDI), and xylylene diisocyanate (XDI) which are represented by the following formulae.

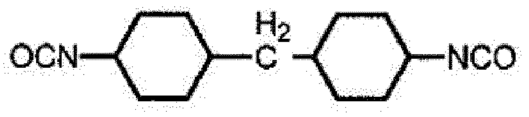

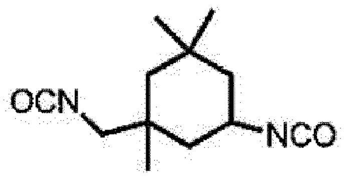

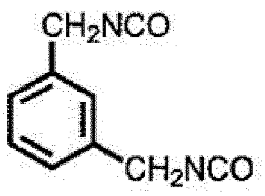

Acrylate compound

Examples of the aforementioned acrylate compound, i.e., an acrylate compound for forming a urethane acrylate that preferably contains a molecular structure with a cyclic backbone, include pentaerythritol triacrylate (PETA), dipentaerythritol pentaacrylate (DPPA), and hydroxypropyl (meth)acrylate (hydroxypropyl acrylate: HPA).

In addition, a compound having a (meth)acryloyloxy group and a hydroxy group, for example, a monofunctional (meth)acrylic compound having a hydroxyl group, can also be used as the acrylate compound.

Examples of the monofunctional (meth)acrylic compound having a hydroxyl group include a hydroxyl group-containing mono(meth)acrylate {for example, a hydroxyalkyl (meth)acrylate [for example, a hydroxy C2-C20 alkyl-(meth)acrylate such as 2-hydroxyethyl (meth)acrylate, 3-hydroxypropyl (meth)acrylate, and 6-hydroxyhexyl (meth)acrylate, preferably a hydroxy C2-C12 alkyl-(meth)acrylate, and more preferably a hydroxy C2-C6 alkyl-(meth)acrylate], a polyalkylene glycol mono(meth)acrylate [for example, a poly C2-C4 alkylene glycol mono(meth)acrylate such as diethylene glycol mono(meth)acrylate, and polyethylene glycol mono(meth)acrylate], a mono(meth)acrylate of a polyol having three or more hydroxyl groups [for example, an alkane polyol mono(meth)acrylate such as glycerol mono(meth)acrylate and trimethylolpropane mono(meth)acrylate, and a mono(meth)acrylate of a multimer of an alkane polyol such as diglycerol mono(meth)acrylate], etc.}, a N-hydroxyalkyl (meth)acrylamide (for example, a N-hydroxy C1-C4 alkyl (meth)acrylamide such as N-methylol (meth)acrylamide and N-(2-hydroxyethyl) (meth)acrylamide, etc.), and adducts obtained by addition of a lactone (for example, a C4-C10 lactone such as ε-caprolactone) to a hydroxyl group of these compounds (for example, hydroxyalkyl (meth)acrylate) (for example, adducts obtained by addition of about 1-5 moles of lactone).

Note that One kind or two or more kinds of these (meth)acrylic compounds may be used alone or in combination.

Specific examples of a preferable compound for forming a (meth)acryloyloxy group include 2-hydroxy-3-phenoxypropyl acrylate.

Specific examples of a particularly preferable compound among the aforementioned acrylate compounds include pentaerythritol triacrylate (PETA), dipentaerythritol pentaacrylate (DPPA), and hydroxypropyl (meth)acrylate (hydroxypropyl acrylate: HPA).

Polymer of isocyanate compound and acrylate compound

Specific examples of a polymer of the aforementioned isocyanate compound and the aforementioned acrylate compound, namely, a urethane acrylate polymer, include a polymer of xylylene diisocyanate (XDI) and pentaerythritol triacrylate (PETA), a polymer of XDI and dipentaerythritol pentaacrylate (DPPA), a polymer of dicyclohexyl methane diisocyanate (H12MDI) and PETA, a polymer of isophorone diisocyanate (IPDI) and PETA, and a polymer of XDI and hydroxypropyl (meth)acrylate (HPA).

Furthermore, in addition to the aforementioned isocyanate compound and the aforementioned acrylate compound, examples of a urethane acrylate containing a cyclic backbone also include polymers containing a polyol compound as a structural unit. A polyol compound (polyhydric alcohol) is a compound having two or more hydroxy groups in the molecule. Specifically, examples of the polyol compound include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and neopentyl glycol hydroxypivalate ester; polylactone diols obtained by addition of a lactone such as ε-caprolactone to these dihydric alcohols; ester diols such as bis(hydroxyethyl)terephthalate; polyether diols such as an alkylene oxide adduct of bisphenol A, polyethylene glycol, polypropylene glycol, and polybutylene glycol; monoepoxy compounds including an α-olefin epoxide such as propylene oxide and butylene oxide, and Cardula E10 (trade name) [manufactured by Shell Kagaku, glycidyl ester of synthetic highly-branched saturated fatty acid]; trihydric or higher alcohols such as glycerol, trimethylolpropane, trimethylol ethane, diglycerol, triglycerol, 1,2,6-hexanetriol, pentaerythritol, dipentaerythritol, sorbitol, and mannitol; polylactonepolyols obtained by addition of a lactone such as ε-caprolactone to these trihydric or higher alcohols; and alicyclic polyhydric alcohols such as 1,4-cyclohexane dimethanol, tricyclodecane dimethanol, hydrogenated bisphenol A, hydrogenated bisphenol F, hydrogenated bisphenol A and hydrogenated bisphenol F.

Examples of the polyol compound include a urethane acrylate which contains, for example, tricyclodidecane dimethanol (TCDDM) represented by the following formula as a structural unit.

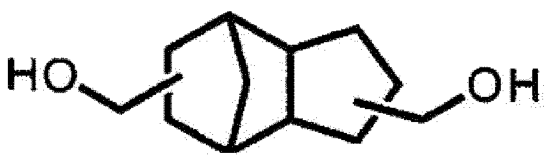

Specific examples of a preferable urethane acrylate polymer described above include a polymer of tricyclodidecane dimethanol (TCDDM), IPDI, and PETA, a polymer of TCDDM, H12MDI, and PETA, a polymer containing a structural unit DPPA instead of, or together with, PETA of the above-mentioned polymers, and a polymer of xylylene diisocyanate (XDI) and hydroxypropyl (meth)acrylate (HPA).

(Urethane acrylate containing predetermined structural unit)

Specific examples of a preferable urethane acrylate resin also include a urethane acrylate resin having a structural unit derived from an isocyanate, and a structural unit derived from a compound containing a (meth)acryloyloxy group and a hydroxy group, which will be described below.

Examples of a preferable structural unit of the aforementioned urethane (meth)acrylate include the followings.

Isocyanate compound

For example, an aromatic isocyanate which may have an alkyl group such as a methyl group as a substituent, preferably an aromatic isocyanate with a total carbon number of 6-16, more preferably an aromatic isocyanate with a total carbon number of 7-14, and particularly preferably an aromatic isocyanate with a total carbon number of 8-12, can be used as an isocyanate compound for forming the aforementioned structural unit.

The aforementioned isocyanate is preferably one that has a cyclic backbone. Thus, although the aforementioned isocyanate is preferably an aromatic isocyanate or an alicyclic isocyanate, it may also be an aliphatic isocyanate with no cyclic backbone (non-cyclic aliphatic isocyanate).

Examples of a compound that forms a preferable structural unit of the urethane (meth)acrylate include: a polyisocyanate such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethyl hexamethylene diisocyanate, tetramethyl xylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; a trimer or tetramer compound of such polyisocyanates; a biuret polyisocyanates; a water-dispersed polyisocyanate (for example, "AQUANATE 100", "AQUANATE 110", "AQUANATE 200", "AQUANATE 210", etc. manufactured by Nippon Polyurethane Industry Co., Ltd.); and a reaction product of such polyisocyanates and polyols.

Among these isocyanates, diphenylmethane diisocyanate, toluene diisocyanate, naphthalene diisocyanate, a trimethylolpropane (TMP) adduct of toluene diisocyanate, an isocyanate isomer of toluene diisocyanate, a TMP adduct of xylene diisocyanate, and the like are favorable.

Compound having (meth)acryloyloxy group and hydroxy group

Specific examples of a preferable compound having a (meth)acryloyloxy group and a hydroxy group, which can be used for forming the aforementioned structural unit, include a monofunctional (meth)acrylic compound having a hydroxyl group.

Examples of the monofunctional (meth)acrylic compound having a hydroxyl group include a hydroxyl group-containing mono(meth)acrylate {for example, a hydroxyalkyl (meth)acrylate [for example, a hydroxy C2-C20 alkyl-(meth)acrylate such as 2-hydroxyethyl (meth)acrylate, 3-hydroxypropyl (meth)acrylate, and 6-hydroxyhexyl (meth)acrylate, preferably a hydroxy C2-C12 alkyl-(meth)acrylate, and more preferably a hydroxy C2-C6 alkyl-(meth)acrylate], a polyalkylene glycol mono(meth)acrylate [for example, a poly C2-C4 alkylene glycol mono(meth)acrylate such as diethylene glycol mono(meth)acrylate, and polyethylene glycol mono(meth)acrylate], a mono(meth)acrylate of a polyol having three or more hydroxyl groups [for example, an alkane polyol mono(meth)acrylate such as glycerol mono(meth)acrylate and trimethylolpropane mono(meth)acrylate, and a mono(meth)acrylate of a multimer of an alkane polyol such as diglycerol mono(meth)acrylate], etc.}, a N-hydroxyalkyl (meth)acrylamide (for example, a N-hydroxy C1-C4 alkyl (meth)acrylamide such as N-methylol (meth)acrylamide and N-(2-hydroxyethyl) (meth)acrylamide, etc.), and an adduct obtained by addition of a lactone (for example, a C4-C10 lactone such as ε-caprolactone) to a hydroxyl group of these compounds (for example, hydroxyalkyl (meth)acrylate) (for example, an adduct obtained by addition of about 1-5 moles of lactone).

Note that One kind or two or more kinds of these (meth)acrylic compounds may be used alone or in combination.

Specific examples of a preferable compound for forming an alkyl group containing a (meth)acryloyloxy group ("A3" described below) include 2-hydroxy-3-phenoxypropyl acrylate.

Other examples of the aforementioned urethane (meth)acrylate containing a predetermined structural unit further include, in addition to the isocyanate compounds and compounds having a (meth)acryloyloxy group and a hydroxy group, a polymer containing a polyol compound as a structural unit.

A polyol compound (polyhydric alcohol) is a compound having two or more hydroxy groups in the molecule. Specifically, examples of the polyol compound include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and neopentyl glycol hydroxypivalate ester; polylactone diols obtained by addition of a lactone such as ε-caprolactone to these dihydric alcohols; ester diols such as bis(hydroxyethyl)terephthalate; polyether diols such as an alkylene oxide adduct of bisphenol A, polyethylene glycol, polypropylene glycol, and polybutylene glycol; monoepoxy compounds including an α-olefin epoxide such as propylene oxide and butylene oxide, and Cardula E10 (trade name) [manufactured by Shell Kagaku, glycidyl ester of synthetic highly-branched saturated fatty acid]; trihydric or higher alcohols such as glycerol, trimethylolpropane, trimethylol ethane, diglycerol, triglycerol, 1,2,6-hexanetriol, pentaerythritol, dipentaerythritol,

sorbitol, and mannitol; polylactonepolyols obtained by addition of a lactone such as ε-caprolactone to these trihydric or higher alcohols; and alicyclic polyhydric alcohols such as 1,4-cyclohexane dimethanol, tricyclodecane dimethanol, hydrogenated bisphenol A, and hydrogenated bisphenol F.

In addition to the isocyanate compounds and the compounds having a (meth)acryloyloxy group and a hydroxy group, a urethane (meth)acrylate containing a polyol compound as a structural unit preferably contains at least a component represented by Formula (i) below.

$$(A3)\text{-}O(OC)HN\text{-}A2\text{-}HN(OC)\text{-}O\text{-}A1\text{-}O\text{-}(CO)NH\text{-}A2\text{-}NH\text{-}(CO)O\text{-}(A3) \ldots \qquad (i)$$

(in Formula (i),

A1 represents an alkylene group derived from the above-described polyol compound,
A2 each independently represent an alkylene group derived from the above-described isocyanate compound, and
A3 each independently represent an alkyl group derived from the above-described compound having a (meth)acryloyloxy group and a hydroxy group.

Specific examples of a preferable urethane (meth)acrylate contained in the above-described resin material include a compound below which contains structural units derived from ethylene glycol, pentaerythritol triacrylate, and isophorone diisocyanate, respectively. In the formula, the value n is 0-10, preferably 1-5, and more preferably 1-3.

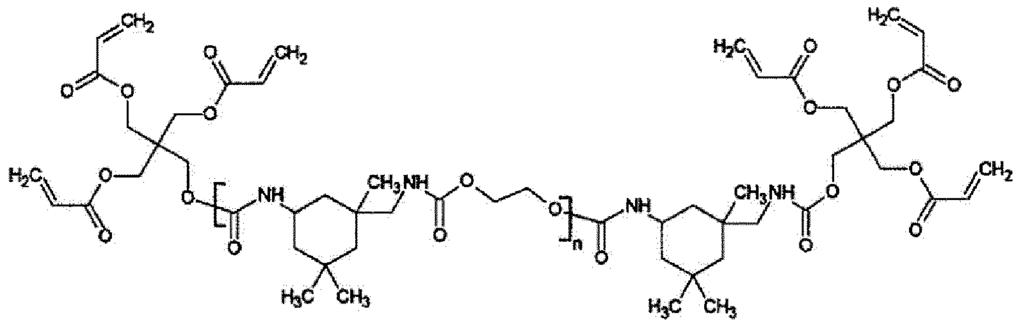

In a urethane acrylate resin, the ratio of a compound having a (meth)acryloyloxy group and a hydroxy group or a structural unit derived from such a compound to isocyanate or an isocyanate-derived structural unit is preferably 99:1-30:70 (weight ratio), more preferably 97:3-60:40, and still more preferably 95:5-80:20.

(Urethane acrylate containing acrylate)

Specific examples of a preferable urethane acrylate resin include those containing a urethane acrylate and an acrylate. Specific examples of a more preferable urethane acrylate resin include those containing a mixture of a hexafunctional urethane acrylate and a difunctional acrylate.

(Hexafunctional) urethane acrylate

As described above, the urethane acrylate resin preferably contains a urethane acrylate, in particular, a hexafunctional urethane acrylate.

Examples of a preferable compound of a hexafunctional urethane acrylate include those represented by the following formulae, which are a polymer of dicyclohexyl methane diisocyanate (H12MDI) and pentaerythritol triacrylate (PETA), and a polymer of isophorone diisocyanate (IPDI) and PETA. Specific examples of a preferable commercial product of such hexafunctional urethane acrylate include UN-3320HC (polymer of H12MDI and PETA: manufactured by Negami Chemical Industrial Co., Ltd.), CN-968 (polymer of IPDI and PETA: manufactured by Sartomer Japan Inc.), and CN-975 (manufactured by Sartomer Japan Inc.).

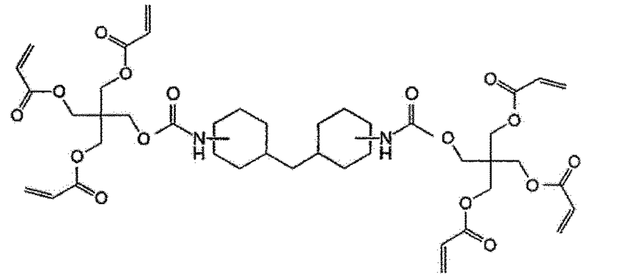

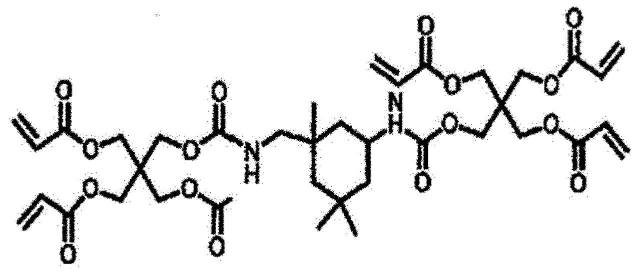

(Meth)acrylate (difunctional (meth)acrylate, etc.)

A (meth)acrylate that is preferably contained in the above-described urethane acrylate resin is preferably an optionally substituted C4-C20 compound containing at least one (meth)acryloyloxy group and at least one vinyl ether group. The number of carbon atoms in the (meth)acrylate is preferably 6-18 and more preferably 8-16. Examples of a substituent in the (meth)acrylate include an alkyl group.

Moreover, the (meth)acrylate is preferably difunctional.

For example, the (meth)acrylate is preferably 2-(2-vinyloxyethoxy)ethyl (meth)acrylate [2-(2-vinyloxyethoxy)ethyl acrylate: VEEA] represented by the formula below.

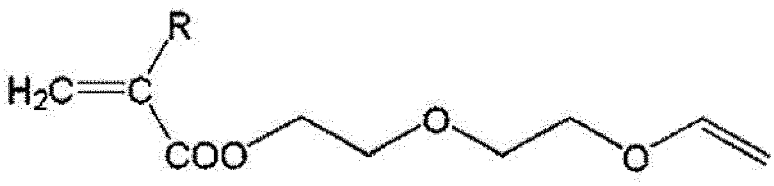

(In the formula, R represents hydrogen or a methyl group).

In the urethane acrylate resin, the ratio between a urethane acrylate and a (meth)acrylate is preferably 99:1-30:70 (weight ratio), more preferably 97:3-60:40, and still more preferably 95:5-80:20.

(Fluorine-containing urethane acrylate)

A fluorine-containing urethane acrylate can also be used as the (meth)acrylate polymer. The fluorine-containing urethane acrylate preferably contains at least a component represented by Formula (ii) below.

(A3)-O(OC)HN-A2-HN(OC)-O-A1-O-(CO)NH-A2-NH-(CO)O-(A3) ... (ii)

In Formula (ii) above, A1 is preferably an optionally substituted alkylene group derived from a fluorine-containing diol with a total carbon number of 8 or less, preferably 6 or less, for example, 4. Examples of the substituent contained in the alkylene group of A1 include an alkyl group.

In Formula (ii) above, A2 are each independently an optionally substituted alkylene group derived from an aliphatic or alicyclic isocyanate with a total of 4 to 20 carbon atoms. The number of carbon atoms of A2 is preferably 6-16, and more preferably 8-12. Examples of the substituent in the alkylene group of A2 include an alkyl group.

Furthermore, an alicyclic isocyanate forming A2 may be, for example, an isophorone diisocyanate represented by the following formula.

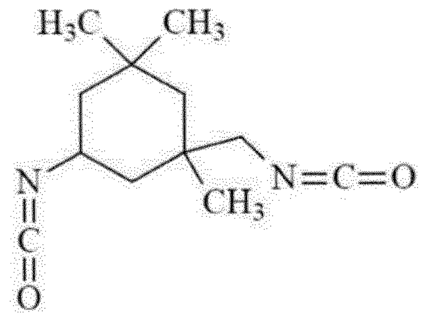

In Formula (ii) above, A3 are each independently an optionally substituted C4-C30 alkyl group containing at least one (meth)acryloyloxy group. The total number of carbon atoms in A3 is preferably 6-20 and more preferably 8-16. Examples of the substituent in the alkyl group of A3 include a branched alkyl group. A3 preferably contains at least two (meth)acryloyloxy groups, for example, three (meth)acryloyloxy groups.

Furthermore, a compound forming A3 may be, for example, pentaerythritol triacrylate represented by the following formula.

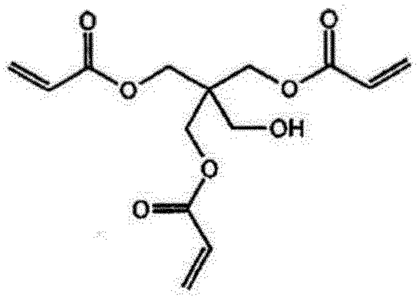

A fluorine-containing urethane acrylate is preferably formed of the aforementioned compounds and may comprise, for example, a compound represented by Formula (IV) below.

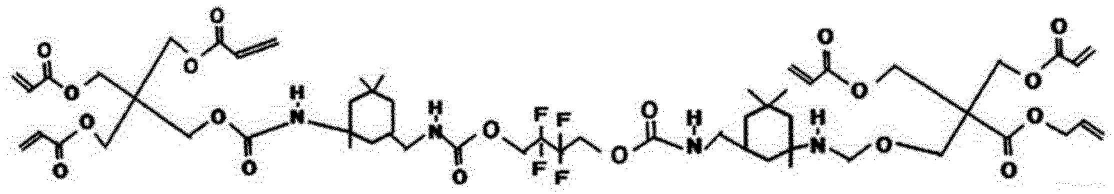

(IV)

- Polyester (meth)acrylate

As mentioned above, a polyester (meth)acrylate can also be used as the (meth)acrylate compound having a (meth)acryloyl group.

Examples of the polyester (meth)acrylate include a polymer (resin) obtained by dehydration condensation reaction of a (meth)acrylic acid, a polybasic carboxylic acid (anhydride), and a polyol. Examples of the polybasic carboxylic acid (anhydride) used for such dehydration condensation reaction include succinic acid (anhydride), adipic acid, maleic acid (anhydride), itaconic acid (anhydride), trimellitic acid (anhydride), pyromellitic acid (anhydride), hexahydrophthalic acid (anhydride), phthalic acid (anhydride), isophthalic acid, and terephthalic acid. Moreover, examples of the polyol used for such dehydration condensation reaction include 1,4-butanediol, 1,6-hexanediol, diethylene glycol, triethylene glycol, propylene glycol, neopentyl glycol, dimethylolheptane, dimethylolpropionic acid, dimethylolbutanoic acid, trimethylolpropane, ditrimethylolpropane, pentaerythritol, and dipentaerythritol.

Specific examples of the polyester (meth)acrylate include ARONIX M-6100, ARONIX M-7100, ARONIX M-8030, ARONIXM-8060, ARONIX M-8530, and ARONIX M-8050 (all trade names of polyester (meth)acrylate-based oligomers manufactured by Toagosei Co., Ltd.), Laromer PE44F, Laromer LR8907, Laromer PE55F, Laromer PE46T, and Laromer LR8800 (all trade names of polyester (meth)acrylate-based oligomers manufactured by BASF), Ebecryl

80, Ebecryl 657, Ebecryl 800, Ebecryl 450, Ebecryl 1830, and Ebecryl 584 (all trade names of polyester (meth)acrylate-based oligomers manufactured by Daicel-UCB Company, Ltd.), and Photomer RCC13-429 and Photomer 5018 (both trade names of polyester (meth)acrylate-based oligomers manufactured by San Nopco Limited).

The (meth)acrylate equivalent of the (meth)acrylate polymer used as the active-energy-ray-curable resin is preferably 200-500 g/eq. The (meth)acrylate equivalent of the (meth)acryloyl polymer is preferably 220-450 g/eq, and more preferably 250-400 g/eq.

Furthermore, the (meth)acrylate polymer as the active-energy-ray-curable resin preferably has a weight average molecular weight of 5,000-200,000. The weight average molecular weight of the (meth)acrylate polymer is preferably 10,000-150,000, more preferably 15,000-100,000, and still more preferably 20,000-50,000.

The weight average molecular weight can be measured based on the description in paragraphs 0061 to 0064 of Japanese Unexamined Patent Application Publication No. 2007-179018. Hereinafter, the measurement method will be described in detail.

[Table 1]

| Conditions for measuring weight average molecular weight | |
|---|---|
| Device | "Aliance" manufactured by Waters |
| Columns | "Shodex K-805L" manufactured by Showa Denko K.K. (2 columns) |
| Detector | UV detector: 254 nm |
| Eluent | Chloroform |

First, a calibration curve representing the relationship between elution time and molecular weights of a polycarbonate is prepared by universal calibration using polystyrene as standard polymers. Then, an elution curve (chromatogram) of the polycarbonate is determined under the same conditions as those for the above-described calibration curve. Furthermore, a weight average molecular weight (Mw) is calculated from the elution time (molecular weight) of the polycarbonate and the peak area of the corresponding elution time (number of molecules). The weight average molecular weight can be expressed by Formula (A) below, where Ni represents the number of molecules having molecular weight Mi.

$$Mw = \Sigma(NiMi2)/\ \Sigma(NiMi) \qquad ...(A)$$

Herein, a (meth)acrylate refers to both acrylate and methacrylate.

As described above, a hard coat composition containing a (meth)acryloyl polymer which has a (meth)acrylate equivalent and a weight average molecular weight in the prescribed ranges has good tack-free property before curing and good scratch resistance after curing, and is also capable of facilitating curing/polymerization reactions. Specifically, use of the (meth)acrylate compound (polymer) having a (meth)acryloyl group in a hard coat composition results good tack-free property (anti-tack property), and can prevent deterioration of the appearance even if thermoforming is carried out with the protective film left on the laminae. This is because the protective film can easily be peeled off from the laminate after thermoforming. Such a polymer (meth)acrylate compound having a (meth)acryloyl group is also commercially available and easily accessible. Examples of the manufacturers include DIC Corporation, Kyoeisha Chemical Co., Ltd., and DSP Gokyo Food and Chemical Co., Ltd.

- Other active-energy-ray-curable resins

(Meth)acrylate compounds ((meth)acrylate polymers/resins) other than those described above, for example, (meth)acrylate compounds that do not contain a (meth)acryloyl group, or that do not contain a (meth)acrylate backbone, can also be used as the active-energy-ray-curable resin.

Alternatively, those other than (meth)acrylate compounds, for example, an epoxy compound, an oxetane compound, and the like can also be used as the active-energy-ray-curable resin.

Furthermore, one or multiple kinds of active-energy-ray-curable resins may be used in the hard coat composition. The content of the active-energy-ray-curable resin in the hard coat composition is preferably 40 wt% or more, more preferably 60 wt% or more, and still more preferably 80 wt% or more, relative to the total weight of the hard coat composition.

(Polyfunctional acrylate compound)

For example, a pentaerythritol-based polyfunctional acrylate compound may be added to the (meth)acrylate compound. As the polyfunctional acrylate compound which has a plurality of, preferably three or more, acrylate groups, for example, pentaerythritol triacrylate or the like can be used, as well as pentaerythritol tetraacrylate and dipentaerythritol hexaacrylate represented by Formulae (3) and (4) below.

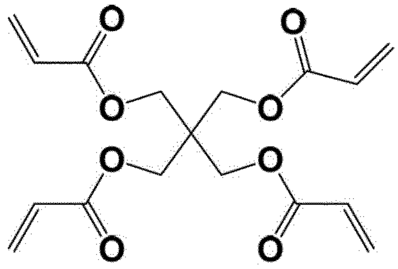
(3)

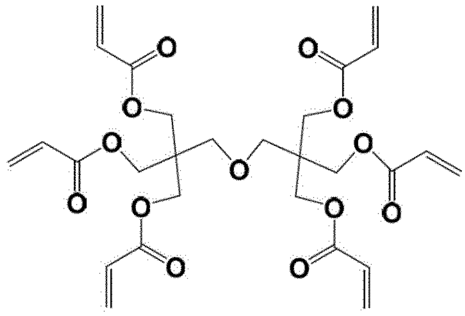
(4)

The polyfunctional acrylate compound is contained in an amount of preferably 70 wt% or less, more preferably 50 wt% or less, and still more preferably 30 wt% or less, relative to the total weight of the (meth)acrylate compound. Accordingly, the polyfunctional acrylate compound can be added to the hard coat composition so as to allow reaction with the acryloyl group, the glycidyl group (epoxy group), the hydroxy group or the like contained in the side chains of the (meth)acrylate polymer, thereby forming a hard coat layer having higher scratch resistance.

(Nanoparticles)

Nanoparticles can be added to impart scratch resistance and hardness to the hard coat composition. While nanoparticles may be either inorganic or organic, they are preferably inorganic nanoparticles. For example, metal oxide nanoparticles such as nano-silica, nano-alumina, nano-titania, or nano-zirconia can be used. Alternatively, nano-diamonds or the like may be used.

The inorganic nanoparticles contained in the hard coat composition preferably include silica particles. Moreover, the nanoparticles contained in the hard coat are preferably treated with a surface treatment agent. The surface treatment allows the inorganic nanoparticles to be dispersed in a stable state in the hard coat composition (particularly, (meth)acrylate resin ((meth)acrylate polymer)).

As the surface treatment agent used for the nanoparticles (e.g., inorganic nanoparticles), a compound having a substituent that can bind to the surface of the nanoparticles and a substituent highly compatible with the component (particularly, (meth)acryloyl polymer) of the hard coat composition containing the dispersed inorganic oxide nanoparticles can be used favorably. For example, a silane compound, an alcohol, an amine, carboxylic acid, sulfonic acid, phosphonic acid, or the like may be used as the surface treatment agent.

The inorganic nanoparticles preferably have a copolymerizable group on their surface. The copolymerizable group can be introduced by the surface treatment of the inorganic nanoparticles, where specific examples of such a copolymerizable group include a vinyl group, a (meth)acrylic group, and a free-radically-polymerizable group.

The average particle size of the nanoparticles is preferably 5-500 nm, more preferably 10-300 nm, and still more preferably 20-100 nm. The average particle size of the nanoparticles can be measured, for example, by a particle size measurement method employing dynamic light scattering using Zetasizer Nano ZS available from Malvern Panalytical Ltd.

The hard coat composition preferably contains the nanoparticles, e.g., inorganic nanoparticles, in an amount of 20 wt% to 80 wt% relative to the total weight of the hard coat composition. More preferably, the hard coat composition contains the inorganic nanoparticles in an amount of 30 wt% to 70 wt%, and still more preferably in an amount of 40 wt% to 60 wt%.

(Leveling agent)

In order to impart leveling property, anti-fouling property, and abrasion resistance to the hard coat composition, a silicone-based compound can be added as a leveling agent. A silicone-based compound having a polyalkylsiloxane bond is used. Such a compound can be obtained by synthesis or is available in the market. For example, KP series available from Shin-Etsu Silicone, BYK series available from BYK-Chemie GmbH, and TEGO Glide series available

from EVONIK can be used.

In order to impart leveling property, anti-fouling property, and abrasion resistance to the hard coat composition, a fluorine-based compound can be added as a leveling agent. A fluorine-based compound having a perfluoropolyether bond is used. Such a compound can be obtained by synthesis or is available in the market. For example, MEGAFACE RS series available from DIC, KY series available from Shin-Etsu Chemical Co., Ltd., and OPTOOL series available from Daikin Industries, Ltd. can be used.

The leveling agent is contained in the hard coat composition preferably in an amount of 0.1 wt% or more and 10 wt% or less relative to the total weight of the hard coat composition. The content of the leveling agent in the hard coat composition is more preferably 0.5 wt% or more and 7 wt% or less, and still more preferably 1 wt% or more and 5 wt% or less.

(Curing property of hard coat composition)

The hard coat composition is preferably curable by an energy ray or heat, more preferably curable by an energy ray, and still more preferably curable by UV. Thus, the hard coat composition preferably further contains a photopolymerization initiator. Examples of the photopolymerization initiator include IRGACURE 184 (1-hydroxy-cyclohexyl-phenyl-ketone), IRGACURE 1173 (2-hydroxy-2-methyl-1-phenyl-propane-1-one), IRGACURE TPO (2,4,6-trimethylbenzoyl-diphenyl-phosphine oxide), IRGACURE 819 (bis(2,4,6-trimethylbenzoyl)-phenylphosphine oxide), and Esacure ONE (oligo(2-hydroxy-2-methyl-1-[4-(1-methylvinyl)phenyl]propanone), among which IRGACURE TPO or the like is favorable as the photopolymerization initiator in terms of heat resistance.

The photopolymerization initiator is contained in the hard coat composition in an amount of, for example, 1 wt% or more and 6 wt% or less relative to the total weight of the hard coat composition. The content of the photopolymerization initiator in the hard coat composition is more preferably 2 wt% or more and 5 wt% or less, and still more preferably 3 wt% or more and 4 wt% or less.

(Other additives)

The hard coat composition may also contain other additives, for example, at least one additive selected from the group consisting of a heat stabilizer, an antioxidant, a flame retardant, a flame retardant auxiliary agent, a UV absorber, a mold release agent, and a colorant. An antistatic agent, a fluorescent brightening agent, an anti-fog agent, a fluidity modifier, a plasticizer, a dispersant, an antibacterial agent and the like can also be added to the hard coat composition as long as they do not significantly impair the desired physical properties.

The active-energy-ray-curable resin, for example, the (meth)acrylate polymer and the nanoparticles, are contained in the hard coat composition in a total amount of, preferably 60% or more by mass, more preferably 80% or more by mass, and particularly preferably 90% or more by mass. Accordingly, the content of the component other than these two primary components in the hard coat composition is preferably less than 40% by mass, more preferably less than 20% by mass, and particularly preferably less than 10% by mass.

A dilution solvent is used for adjusting viscosity upon preparing a hard coat composition for forming the hard coat layer, where the dilution solvent is not particularly limited as long as it is non-polymerizable. Use of this dilution solvent allows the composition which is mainly used for forming a hard coat layer to be easily applied to a transparent substrate.

Examples of the dilution solvent include toluene, xylene, ethyl acetate, propyl acetate, butyl acetate, methyl cellosolve, ethyl cellosolve, ethyl cellosolve acetate, propylene glycol monomethyl ether acetate, methyl alcohol, ethyl alcohol, isopropyl alcohol, butyl alcohol, diacetone alcohol, acetone, methyl ethyl ketone, methyl isobutyl ketone, cyclohexanone, hexane, heptane, octane, decane, dodecane, propylene glycol monomethyl ether, and 3-methoxybutanol.

<Production of hard coat layer>

The hard coat layer can be produced, for example, by applying a composition containing the above-described active-energy-ray-curable resin, for example, the (meth)acrylate polymer, the above-described polymerization inhibitor, and the like. For example, components such as the (meth)acrylate polymer and the like are mixed and further stirred with a mixing impeller to prepare a hard coat composition.

The hard coat composition can be applied to a surface of the substrate layer, for example, by a technique using a bar coater, a gravure coater, or a die coater, or by dip coating, spray coating or the like. The applied hard coat liquid (hard coat composition) is then dried at a predetermined temperature. The drying temperature is preferably 30°C to 150°C, and more preferably 60°C to 120°C. If the temperature is 30°C or lower, the organic solvent will remain and adversely affect the physical property of the hard coat. On the other hand, if the temperature is 150°C or higher, the substrate may be deformed.

The thickness of the hard coat layer preferably lies within a range of 1 μm to 10 μm, and more preferably in a range of 2 μm to 7 μm. If the thickness is less than 1 μm, the resultant will lack the expected properties. On the other hand, if the thickness exceeds 10 μm, adhesiveness and formability may be deteriorated.

<Properties of hard coat layer>

(i) Tack-free property

The hard coat layer of the laminate of the present invention has excellent tack-free property. Although adhesiveness of the highly tack-free hard coat layer is not as strong as that of a general adhesive layer, a protective film can easily stick to the hard coat layer. A formable laminate which has the hard coat layer in an uncured state covered with a protective film can maintain a given shape and can prevent the hard coat layer in an uncured state from partially transferring to a surface of other object (e.g., hand of the worker) that makes contact with the laminate. Thus, a formable laminate having such excellent characteristics can facilitate forming into a shape suitable for any various applications and subsequent curing. Moreover, it can also facilitate the formable laminate in an uncured state to keep its given shape during storage or distribution.

On the other hand, a resin composition with poor tack-free property requires a step of curing before it is formed into a shape suitable for any various applications, rendering it poor in formability.

(ii) Gloss (appearance) after peeling off protective film

An uncured hard coat layer covered with a protective film is processed into a film and thereafter the protective film is peeled off so that unevenness on the surface of the processed film can be prevented and high gloss can be maintained. In an evaluation test, the hard coat layer of the laminate of the present invention was confirmed to maintain smooth and high gloss surface after the protective film was peeled off.

(iii) Formability (air pressure formability)

The hard coat layer of the formable laminate of the present invention also has excellent formability in an uncured state. The formability of the hard coat composition can be evaluated, for example, as follows. Specifically, a hard coat composition is applied and dried on a surface of a substrate layer to give a laminate, which is then placed and heated on a mold having a projection to see whether the sheet-shaped hard coat composition can stretch appropriately along the projection, whether a crack is generated, and the like upon air pressure forming.

While details will be omitted, in such an evaluation test, the hard coat layer was confirmed to be capable of stretching appropriately along the projection without generating a crack upon air pressure forming.

(iv) Scratch resistance

When the protective film was removed from the hard coat layer and the hard coat layer was cured in an evaluation test, it had high scratch resistance. As will be described later in detail, when the formable laminate having the hard coat layer was cured, the surface of the hard coat layer was confirmed to have higher scratch resistance than that of a cured PMMA resin (methyl polymethacrylate resin) or that of a resin used for lenses.

(v) Hardness

When the protective film was removed from the hard coat layer and the hard coat layer was cured in an evaluation test, it had high hardness. Specifically, the hard coat layer can realize pencil hardness of B or harder as determined by an evaluation test according to JIS K 5600-5-4: 1999. More preferably, pencil hardness of F or harder and particularly preferably pencil hardness of 2H or harder can be realized on the surface of the cured hard coat layer.

(vi) Adhesiveness

The cured hard coat composition also has excellent adhesiveness. Specifically, the hard coat composition can give an adhesiveness score of 0 as determined by the evaluation method according to JIS K 5600-5-6.

Moreover, after adhering a protective film to the hard coat layer formed of a (meth)acrylate polymer, a pressure of 30 $kg/m^2$ was applied to the masking film at a temperature of 23 ± 2°C and a relative humidity of 50 ± 5%. When the masking film was peeled off 24 hours later, the Sa of the surface of the hard coat layer was preferably 0.0300 μm or less, more preferably 0.0200 μm or less, and still more preferably 0.0150 μm or less.

The protective film was peeled off from the hard coat layer at a peeling angle (i.e., an angle made between the masking film and the surface of the hard coat layer during peeling) of 90°, and a peeling rate of 600 mm/min.

[Protective Film]

After drying the hard coat layer, a protective film is adhered to the surface of the hard coat to protect the surface of the hard coat from scratches. The adhesive side of the protective film that makes contact with the hard coat layer is an adhesive surface having an appropriate adhesiveness. The protective film may be a monolayer consisting solely of an adhesive layer, but it preferably has a two-layer structure consisting of a substrate and an adhesive layer. The two-layer protective film should be layered on the hard coat layer such that the adhesive surface of the adhesive layer makes contact with the hard coat layer. The protective film may also have a multilayer structure which includes another layer in addition to the aforementioned substrate layer and adhesive layer. Alternatively, the protective film may have a monolayer structure, in which case, again, the adhesive surface (hard coat layer side) of the monolayer protective film should have an appropriate adhesiveness.

The substrate of the protective film is preferably formed of a thermoplastic resin, and more preferably contains a polyolefin resin. Examples of the polyolefin resin contained in the protective film include polyethylene and polypropylene, which may be either a homopolymer or a copolymer. Among the polyolefin resins, a polyethylene is favorable.

While such a polyethylene may be a low-density polyethylene (LDPE), a linear low-density polyethylene (LLDPE), a very-low-density polyethylene (VLDPE), a medium-density polyethylene (MDPE), a high-density polyethylene (HDPE), or the like, a low-density polyethylene is preferable.

Moreover, a polyolefin copolymer may be a copolymer of an ethylene or a propylene and a monomer that is copolymerizable therewith. Examples of the monomer copolymerizable with an ethylene or a propylene include an $\alpha$-olefin, a styrene, a diene, a cyclic compound, and an oxygen atom-containing compound.

Examples of the $\alpha$-olefin include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, and 1-eicosene. Examples of the styrene include styrene, 4-methylstyrene, and 4-dimethylaminostyrene. Examples of the diene include 1,3-butadiene, 1,5-hexadiene, 1,4-hexadiene, and 1,7-octadiene. Examples of the cyclic compound include norbornene and cyclopentene. Examples of the oxygen atom-containing compound include hexenol, hexenoic acid, and methyl octenoate. One kind or two or more kinds of these copolymerizable monomers can be used alone or in combination. Alternatively, it may be a copolymer of an ethylene and a propylene.

The copolymer may be any of an alternating copolymer, a random copolymer, or a block copolymer.

The polyolefin resin contained in the substrate of the protective film may contain a modified polyolefin resin which has been modified with a small amount of a carboxyl group-containing monomer such as acrylic acid, maleic acid, methacrylic acid, maleic anhydride, fumaric acid, or itaconic acid. Modification usually takes place by copolymerization or graft modification.

The substrate of the protective film contains the polyolefin resin in an amount of preferably 80 wt% or more, more preferably 90 wt% or more, and still more preferably 95 wt% or more, relative to the total weight of the substrate.

The adhesive layer of the protective film is preferably formed of an elastomer or a thermoplastic resin. Examples of the thermoplastic resin contained in the adhesive layer include a polyolefin resin such as a polypropylene and a modified polyolefin. The polyolefin resin contained in the protective film (masking film) may be, for example, polyethylene, polypropylene or the like, which may be either a homopolymer or a copolymer. Among the polyolefin resins, polyethylene is favorable.

The adhesive layer of the protective film contains an elastomer or a thermoplastic resin in an amount of preferably 80 wt% or more, more preferably 90 wt% or more, and still more preferably 95 wt% or more, relative to the total weight of the adhesive layer

The thickness of the protective film of the formable laminate is preferably 10 $\mu$m-100 $\mu$m, and more preferably 20 $\mu$m-80 $\mu$m.

The adhesive surface of the protective film, that is, the adhesive side that makes contact with the surface of the hard coat layer, preferably has a surface free energy of 30.0 (mN/m) or more, before it is adhered to the hard coat layer. The surface free energy is determined by measuring the average contact angle of 1 $\mu$l of water and the average contact angle of 1 $\mu$l of diiodomethane ($CH_2I_2$) that were left to stand still on the adhesive surface by $\theta$/2 method, and then calculating the surface free energy by OWRK method (Owens-Wendt-Rabel-Kaelble method) from these average contact angles. The surface free energy of the aforementioned adhesive surface is preferably 31.0 (mN/m) or more.

The aforementioned average contact angle of 1 $\mu$l of diiodomethane standing still on the adhesive surface of the protective film that makes contact with the surface of the hard coat layer is preferably 64° or less, more preferably 60° or less, and still more preferably 58° or less.

The protective film is found to have high wettability if it has an adhesive surface with a high surface free energy or a small contact angle with a diiodomethane drop in a static state as described above. By covering the surface of the

hard coat layer with a protective film with high wettability, a smooth surface of the hard coat layer can easily be maintained without causing minute unevenness.

Furthermore, since such a protective film can ensure protection of the surface of the hard coat layer even when the hard coat layer is in a soft uncured state, it can improve formability of the hard coat layer.

The surface roughness Sa (ISO 25178) of the protective film on the adhesive surface that will make contact with the hard coat layer is preferably 0.100 μm or less before it is adhered to the hard coat layer (in an unused state). The surface roughness Sa of the protective film on the adhesive surface before use is more preferably 0.090 μm or less, still more preferably 0.080 μm or less, and particularly preferably 0.070 μm or less.

The adhesiveness of the protective film on the adhesive surface to a surface of PMMA (methyl polymethacrylate resin layer) is preferably 5 (mN/25 mm) or higher and 5000 (mN/25 mm) or lower, and more preferably 9 (mN/25 mm) or higher and 3000 (mN/25 mm) or lower.

<Method for fabricating thermoformable laminate>

A thermoformable laminate is fabricated as follows. First, a material such as a resin composition is processed into a layer (sheet) by a conventional technique to form a substrate layer. Such a technique may be, for example, extrusion molding, cast molding, or the like. Extrusion molding may be, for example, a method in which pellets, flakes or powder of the resin composition is melted and kneaded in an extruder, extruded from a T-die or the like, and then the extruded semi-molten sheet is allowed to cool and solidify along rolls.

Next, the hard coat composition obtained as described above is applied to the surface of the monolayer or multilayer substrate to form a hard coat layer.

Then, a protective film described above is adhered to the surface of the resulting intermediate composed of the substrate layer and the hard coat layer, on the hard coat layer side.

[Thermoforming the laminate]

The thermoformable laminate can be used in any method as long as the film is formed by heating. For example, the substrate is heated and thermoformed into a desired shape, for example, by air pressure forming employing air pressure, vacuum forming under vacuum condition, or TOM forming.

The temperature for forming the thermoformable laminate is principally determined based on the Tg (glass transition temperature) of the thermoplastic resin of the substrate layer. The forming temperature is higher than the Tg of the thermoplastic resin of the substrate layer by preferably 0°C to 70°C, and more preferably 20°C to 40°C. For example, a laminate containing a substrate layer composed of a general bisphenol-A-based polycarbonate is most preferably subjected to forming at a temperature in a range of 170°C to 190°C.

Since polymerization reaction of the hard coat layer induced by heat can be suppressed in this thermoformable laminate, forming can be carried out while the protective film is adhered to the hard coat layer. Specifically, a method for forming the thermoformable laminate of the present invention includes a thermoforming step in which the laminate is heated while the protective film is adhered to the hard coat layer. By conducting the series of processes while the protective film is adhered to the hard coat layer, not only generation of scratch but also trapping of foreign substances can be prevented.

[Production of formed item and article]

As described above, a laminate which has been thermoformed into a predetermined shape and removed of a protective film can be cured to obtain a formed item (e.g., cured film). The surface of the formed item (e.g., cured film) on the hard coat layer side has excellent properties. Specifically, the surface of the formed item on the hard coat layer side can realize all of the followings: high pencil hardness, preferably pencil hardness of B or harder as determined by the method according to JIS K 5600-5-4: 1999; high scratch resistance; and excellent adhesiveness, for example, an adhesiveness score of 0 as determined by the method according to JIS K 5600-5-6

Furthermore, the formed item can be irradiated, for example, with an active energy ray such as UV to produce a cured article.

Examples of the aforementioned formed item and article include resin film laminates used for mobile devices, automotive interior parts and the like.

EXAMPLES

Hereinafter, the present invention will be described more specifically by way of examples. The present invention, however, should not be limited to the following examples, and can be modified and carried out in any way without

departing from the scope of the present invention.

Heat reactivity test (heat resistance test)

The thermoformable laminate obtained in each of the examples described below was heated at 200°C for 2 minutes while having the protective film adhered to the hard coat layer. After removing the protective film, 1 ml of methyl ethyl ketone was dropped on the surface of the hard coat layer that had been making contact with the protective film to confirm the appearance a minute later. Crosslinking, in other words, polymerization reaction of the hard coat composition, was judged to have proceeded in laminates that had enhanced chemical resistance.

Thermoformability (workability including deep drawability and right angle-shape formability)

The thermoformable laminate obtained in each example was cut into A4 size to obtain a sample with the protective film left on the laminate. This sample was preheated at 190°C for about 40 seconds. Right after that, the sample was subjected to air pressure forming using compressed air at a pressure of 1.5 MPa and using a mold that had a right-angle-shaped projection with a deep drawing height. The right-angle-shaped molds used for the air pressure forming had a right-angle-shaped portion with a length and a width of 30 mm each and a height of 5 mm or 11 mm; and also had a portion which is connected to the right-angle-shaped portion and has a radius R of 1 mm. The edge of the thermoformed laminate, that is, the region bent along the mold, was visually inspected and those with no whitening and no crack were evaluated good, whereas those having whitening or crack were evaluated poor.

Preparation example 1

A photopolymerization initiator IRGACURE TPO (2,4,6-trimethylbenzoyl-diphenyl phosphine oxide; 3 wt% with respect to the solid content) and a leveling agent BYK-UV3500 manufactured by BYK-Chemie GmbH (a polyether-modified polydimethylsiloxane having an acrylic functional group; 1 wt% with respect to the solid content) were added to a polymer acrylate-based paint ART CURE RA-3602MI manufactured by Negami Chemical Industrial Co., Ltd. (an acrylic polymer containing a (meth)acryloyl group (reactive group) in a side chain of an acrylic backbone) to give a mixture as a photopolymerizable compound. The resulting mixture was diluted with propylene glycol monoethyl ether as a solvent to a solid content concentration of 30%.

Example 1

Five hundred ppm by weight of phenothiazine in terms of solid content was added to the photopolymerizable compound obtained in Preparation example 1 to give a hard coat composition. DF02U (a two-layer film composed of bisphenol-A-based polycarbonate and PMMA manufactured by Mitsubishi Gas Chemical Co., Ltd.: thickness 0.254 mm) was used as a substrate layer. The hard coat composition was applied to a surface of the substrate layer on the PMMA side to a thickness of 3 μm using a bar coater, which was dried at 120°C for 5 minutes. A protective film (PAC-3-50THK manufactured by Sun A Kaken Co., Ltd.) was adhered to the surface of the resulting hard coat layer on the other side from the substrate. A thermoforming test was conducted as described above, where favorable results were obtained for both heights, i.e., 5 mm and 11 mm. Furthermore, in heat reactivity and chemical resistance tests, no change was observed on the surface of the hard coat layer, confirming good heat resistance.

[Polymerization inhibitor 1] Phenothiazine

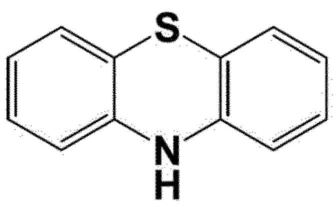

Example 2

A thermoformable laminate was obtained in the same manner as Example 1 except that phenothiazine was

changed to N-isopropyl-N'-phenyl-p-phenylenediamine. In the thermoforming test, favorable results were obtained for both heights, i.e., 5 mm and 11 mm. Furthermore, in the heat reactivity test, no change was observed on the surface of the hard coat layer, confirming good heat resistance.

[Polymerization inhibitor 2] N-isopropyl-N'-phenyl-p-phenylenediamine

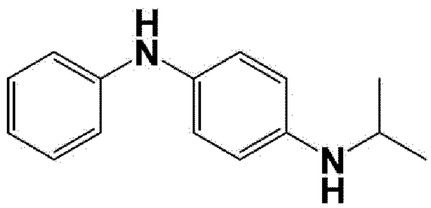

Example 3

A thermoformable laminate was obtained in the same manner as Example 1 except that phenothiazine was changed to 2-hydroxynaphthoquinone. In the thermoforming test, a favorable result was obtained for the height of 5 mm. Furthermore, no change was observed in the heat reactivity test, confirming good heat resistance.

[Polymerization inhibitor 3] 2-Hydroxynaphthoquinone

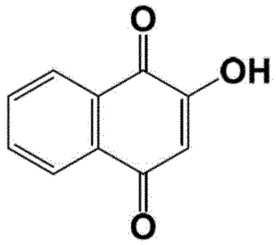

Example 4

A thermoformable laminate was obtained in the same manner as Example 1 except that phenothiazine was changed to 2-mercaptobenzimidazole. In the thermoforming test, a favorable result was obtained for the height of 5 mm. Furthermore, no change was observed in the heat reactivity test, confirming good heat resistance.

[Polymerization inhibitor 4] 2-Mercaptobenzimidazole

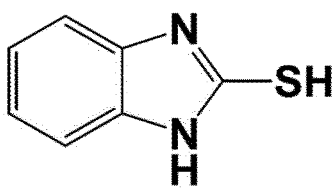

Example 5

A thermoformable laminate was obtained in the same manner as Example 1 except that phenothiazine was changed to 6-ethoxy-2,2,4-trimethyl-1,2-dihydroquinoline. In the thermoforming test, a favorable result was obtained for the height of 5 mm. Furthermore, no change was observed in the heat reactivity test, confirming good heat resistance.

[Polymerization inhibitor 5] 6-Ethoxy-2,2,4-trimethyl-1,2-dihydroquinoline

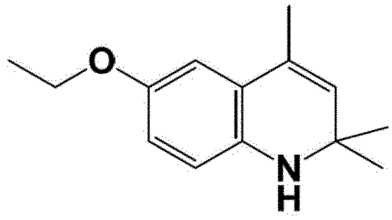

Example 6

A thermoformable laminate was obtained in the same manner as Example 1 except that phenothiazine was changed to 2,2,6,6-tetramethyl-4-oxopiperidine-1-oxyl. In the thermoforming test, a favorable result was obtained for the height of 5 mm. Furthermore, no change was observed in the heat reactivity test, confirming good heat resistance.

[Polymerization inhibitor 6] 2,2,6,6-Tetramethyl-4-oxopiperidine-1-oxyl

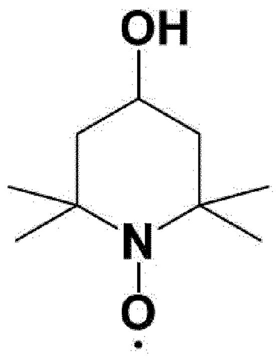

Example 7

The photopolymerizable compound obtained in Preparation example 1 was mixed with nano-silica particles (Organosilicasol MEK-AC-2140Z manufactured by Nissan Chemical Corporation) at a weight ratio of 80:20 (polymer: nano-silica particles), to which 500 ppm by weight of phenothiazine in terms of solid content was further added to give a hard coat composition. A thermoformable laminate was obtained in the same manner as Example 1 using this composition. In the thermoforming test, favorable results were obtained for both heights, i.e., 5 mm and 11 mm. Furthermore, no change was observed in the heat reactivity test, confirming good heat resistance.

Comparative example 1

A thermoformable laminate was obtained in the same manner as Example 1 except that phenothiazine was not added. In the thermoforming test, a poor result was obtained for the height of 5 mm. Furthermore, in the heat reactivity test, crosslinking of the hard coat composition was confirmed to have proceeded.

Comparative example 2

A thermoformable laminate was obtained in the same manner as Example 1 except that phenothiazine was changed to di(tertiary butyl)hydroxytoluene. In the thermoforming test, a poor result was obtained for the height of 5 mm. Furthermore, in the heat reactivity test, crosslinking of the hard coat composition was confirmed to have proceeded.

[Polymerization inhibitor 7] Di(tertiary butyl)hydroxytoluene

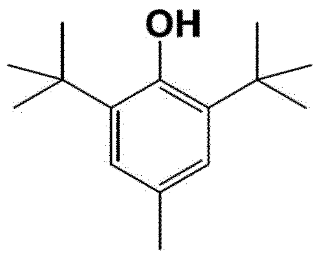

Comparative example 3

A thermoformable laminate was obtained in the same manner as Example 1 except that phenothiazine was changed to 4-methoxyphenol. In the thermoforming test, a poor result was obtained for the height of 5 mm. Furthermore, in the heat reactivity test, crosslinking of the hard coat composition was confirmed to have proceeded.

[Polymerization inhibitor 8] 4-Methoxyphenol

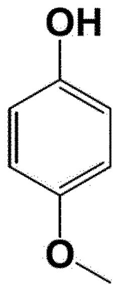

[Table 2]

| | Main component of hard coat composition | Formability | | Crosslinking in heat resistance test |
|---|---|---|---|---|
| | | 5 mm | 11 mm | |
| Example 1 | Polymerization inhibitor 1 | Good | Good | Did not proceed |
| Example 2 | Polymerization inhibitor 2 | Good | Good | Did not proceed |
| Example 3 | Polymerization inhibitor 3 | Good | Poor | Did not proceed |
| Example 4 | Polymerization inhibitor 4 | Good | Poor | Did not proceed |
| Example 5 | Polymerization inhibitor 5 | Good | Poor | Did not proceed |
| Example 6 | Polymerization inhibitor 6 | Good | Good | Did not proceed |
| Example 7 | Polymerization inhibitor 1 (containing nano-silica particles) | Good | Good | Did not proceed |
| Comparative example 1 | None | Poor | Poor | Proceeded |
| Comparative example 2 | Polymerization inhibitor 7 | Poor | Poor | Proceeded |

(continued)

| | Main component of hard coat composition | Formability | | Crosslinking in heat resistance test |
|---|---|---|---|---|
| | | 5 mm | 11 mm | |
| Comparative example 3 | Polymerization inhibitor 8 | Poor | Poor | Proceeded |

Examples 8-11

Hard coat compositions were obtained in the same manner as Example 1 except that the amounts of phenothiazine were changed as indicated in Table 3 below. The results from the thermoforming tests under these conditions are shown in Table 3. Table 3 also includes the results for Example 1 described above.

[Table 3]

| | Amount of phenothiazine (ppm by weight) | Formability | |
|---|---|---|---|
| | | 5 mm | 11 mm |
| Example 8 | 10 | Good | Poor |
| Example 9 | 50 | Good | Good |
| Example 10 | 100 | Good | Good |
| Example 1 | 500 | Good | Good |
| Example 11 | 1000 | Good | Good |

Example 12

A thermoformable laminate was obtained in the same manner as Example 1 except that the substrate was changed from DF-02U to a bisphenol-A-based polycarbonate monolayer film FE-2000 (manufactured by Mitsubishi Gas Chemical Co., Ltd.). In the thermoforming tests, favorable results were obtained for both heights, i.e., 5 mm and 11 mm.

Comparative example 4

A thermoformable laminate was obtained in the same manner as Example 12 except that phenothiazine was not added. In the thermoforming test, a poor result was obtained for the height of 5 mm.

Thus, although some examples showed poor formability, the results from the heat reactivity tests were favorable for all of the examples. As can be appreciated from the above-described examples, polymerization reaction was prevented from proceeding even when the hard coat layer was subjected to thermoforming while the hard coat layer was covered with the protective film and a desired shape was obtained without deteriorating the appearance. Furthermore, the thermoformed hard coat film of each example can be cured to obtain a formed item which has excellent chemical resistance, excellent scratch resistance, and else.

Next, the hard coat layers of the above-described examples and comparative examples were cured using Fusion H bulb (Fusion UV Systems) at an output of 90% while sending air at an air flow rate of 1.8 m/min. UV irradiation was carried out under the condition of 1000 $mJ/cm^2$.

[Evaluation of properties of laminates]

The properties of the laminates that had been cured by ultraviolet (UV) irradiation and the properties of the laminates before curing the hard coat layer (uncured laminates) were evaluated as follows.

<Tack-free property in uncured state>

The tack-free properties of the uncured laminates were evaluated by touching with a finger.

<Gloss (appearance) in uncured state after removing masking>

A test piece having a substrate layer composed of a polycarbonate resin layer and a PMMA resin layer was prepared. The hard coat composition was applied to the surface of the substrate layer of the test piece on the PMMA resin side to form a 7 μm thick hard coat layer, which was dried at 120°C for 5 minutes.

Then, a 30 μm thick polypropylene masking film (protective film) was adhered to the surface of the uncured hard coat layer, and a pressure of 30 kg/$m^2$ was applied to the masking film. The masking film was peeled off 24 hours later to measure the surface roughness Sa (pursuant to ISO25178) of the surface of the hard coat layer using a scanning white light interference microscope VS1530 manufactured by Hitachi High-Tech Corporation.

The examples and the comparative examples that had surface roughness Sa of less than 0.01 μm were evaluated to have good appearance.

<Scratch resistance after curing >

#0000 steel wool was moved back and forth for 15 times under a load of 100 gf/$cm^2$ to make scratches on the surface of the cured hard coat layer. Absolute value of the change in haze (ΔH), i.e., the difference between the haze value measured prior to the scratch test based on JIS K 7136:2000 and the haze value measured after the scratch test based on JIS K 7136:2000, was calculated and evaluated. Examples and comparative examples that had ΔH values of less than 3.0% were evaluated to have good scratch resistance.

<Chemical resistance after curing>

Neutrogena SPF 100 was applied to the surface of the cured hard coat layer and left at 80°C for an hour before the appearance was visually observed. Examples and comparative examples that had no flaw on their surfaces were evaluated to have good chemical resistance.

<Pencil hardness after curing>

Pencil hardness was measured under the conditions specified in JIS K 5600-5-4: 1999, and the evaluation was made based on the grade of the hardest pencil that left no scratch.

<Adhesiveness>

Adhesiveness was evaluated by the evaluation method of JIS K5600-5-6: 1999. Examples and comparative examples that had adhesiveness scores of 0 were evaluated to have good adhesiveness.

The results obtained from the measurements of the physical properties of the laminate films of the examples and the comparative examples are shown in Table 4.

[Table 4]

| | Evaluation | | | | | |
|---|---|---|---|---|---|---|
| | Before UV irradiation | | After UV irradiation | | | |
| | Tack-free property | Appearance | Scratch resistance | Chemical resistance | Pencil hardness | Adhesiveness |
| Example 1 | Good | Good | Good | Good | 2H | Good |
| Example 2 | Good | Good | Good | Good | 2H | Good |
| Example 3 | Good | Good | Good | Good | 2H | Good |
| Example 4 | Good | Good | Good | Good | 2H | Good |
| Example 5 | Good | Good | Good | Good | 2H | Good |

(continued)

| | Evaluation | | | | | |
|---|---|---|---|---|---|---|
| | Before UV irradiation | | After UV irradiation | | | |
| | Tack-free property | Appearance | Scratch resistance | Chemical resistance | Pencil hardness | Adhesiveness |
| Example 6 | Good | Good | Good | Good | 2H | Good |
| Example 7 | Good | Good | Good | Good | 2H | Good |

Thus, the active-energy-ray-curable hard coat compositions of the above-described examples which contained a (meth)acrylate resin having a (meth)acryloyl group were confirmed to have excellent tack-free property and appearance before curing, and also excellent scratch resistance, chemical resistance, pencil hardness, and adhesiveness after curing.

DESCRIPTION OF REFERENCE NUMERALS

10 Formable laminate
12 Protective film
16 Hard coat layer
20 Polymethyl methacrylate layer (substrate layer)
22 Polycarbonate layer (substrate layer)

**Claims**

**1.** A thermoformable laminate, comprising:

(a) a substrate layer comprising a thermoplastic resin;
(b) a post-cure type hard coat layer comprising an active-energy-ray-curable resin having a (meth)acryloyl group, the hard coat layer also comprisinga polymerization inhibitor; and
(c) a protective film,
wherein (a) the substrate layer, (b) the hard coat layer, and (c) the protective film are layered in this order; and the polymerization inhibitor comprises at least one among a quinone-based compound, a sulfur-containing compound, and a nitrogen-containing compound.

**2.** The thermoformable laminate according to Claim 1, wherein the polymerization inhibitor is selected from 2-hydroxynaphthoquinone, N-isopropyl-N'-phenyl-p-phenylenediamine, 6-ethoxy-2,2,4-trimethyl-1,2-dihydroquinoline, 2,2,6,6-tetramethyl-4-oxopiperidine-1-oxyl, phenothiazine, and 2-mercaptobenzimidazole.

**3.** The thermoformable laminate according to Claim 2, wherein the polymerization inhibitor is selected from N-isopropyl-N'-phenyl-p-phenylenediamine, phenothiazine, and 2,2,6,6-tetramethyl-4-oxopiperidine-1-oxyl.

**4.** The thermoformable laminate according to any one of Claims 1 to 3, wherein the hard coat layer comprises the polymerization inhibitor in an amount of 0.0001-5 wt%.

**5.** The thermoformable laminate according to any one of Claims 1 to 4, wherein the active-energy-ray-curable resin having a (meth)acryloyl group has a (meth)acrylate backbone.

**6.** The thermoformable laminate according to any one of Claims 1 to 5, wherein the hard coat layer comprises nanoparticles.

**7.** The thermoformable laminate according to any one of Claims 1 to 6, wherein the hard coat layer comprises a leveling agent.

8. The thermoformable laminate according to any one of Claims 1 to 7, wherein an adhesive surface of the protective film that is a surface on the side facing toward the hard coat layer, has a surface free energy of 30.0 (mN/m) or higher before it is adhered to the hard coat layer, as calculated by OWRK method from an average contact angle of water and an average contact angle of diiodomethane.

9. The thermoformable laminate according to any one of Claims 1 to 8, wherein the adhesive surface of the protective film has a surface roughness Sa of 0.1 μm or less.

10. The thermoformable laminate according to any one of Claims 1 to 9, wherein the hard coat layer is UV curable.

11. The thermoformable laminate according to any one of Claims 1 to 10, wherein the thermoplastic resin comprises an aromatic polycarbonate.

12. The thermoformable laminate according to Claim 11, wherein the aromatic polycarbonate comprises a bisphenol-A-based polycarbonate.

13. The thermoformable laminate according to any one of Claims 1 to 12, wherein the substrate layer comprises at least two layers, namely, an acrylic resin layer and an aromatic polycarbonate layer.

14. A method for forming a thermoformable laminate, the method comprising a thermoforming step in which the thermoformable laminate according to any one of Claims 1 to 13 is heated while the protective film is adhered to the laminate.

15. A formed item obtained by forming the thermoformable laminate according to any one of Claims 1 to 13.

16. An article obtained by irradiating the formed item according to Claim 15 with an active energy ray.

[Figure 1]

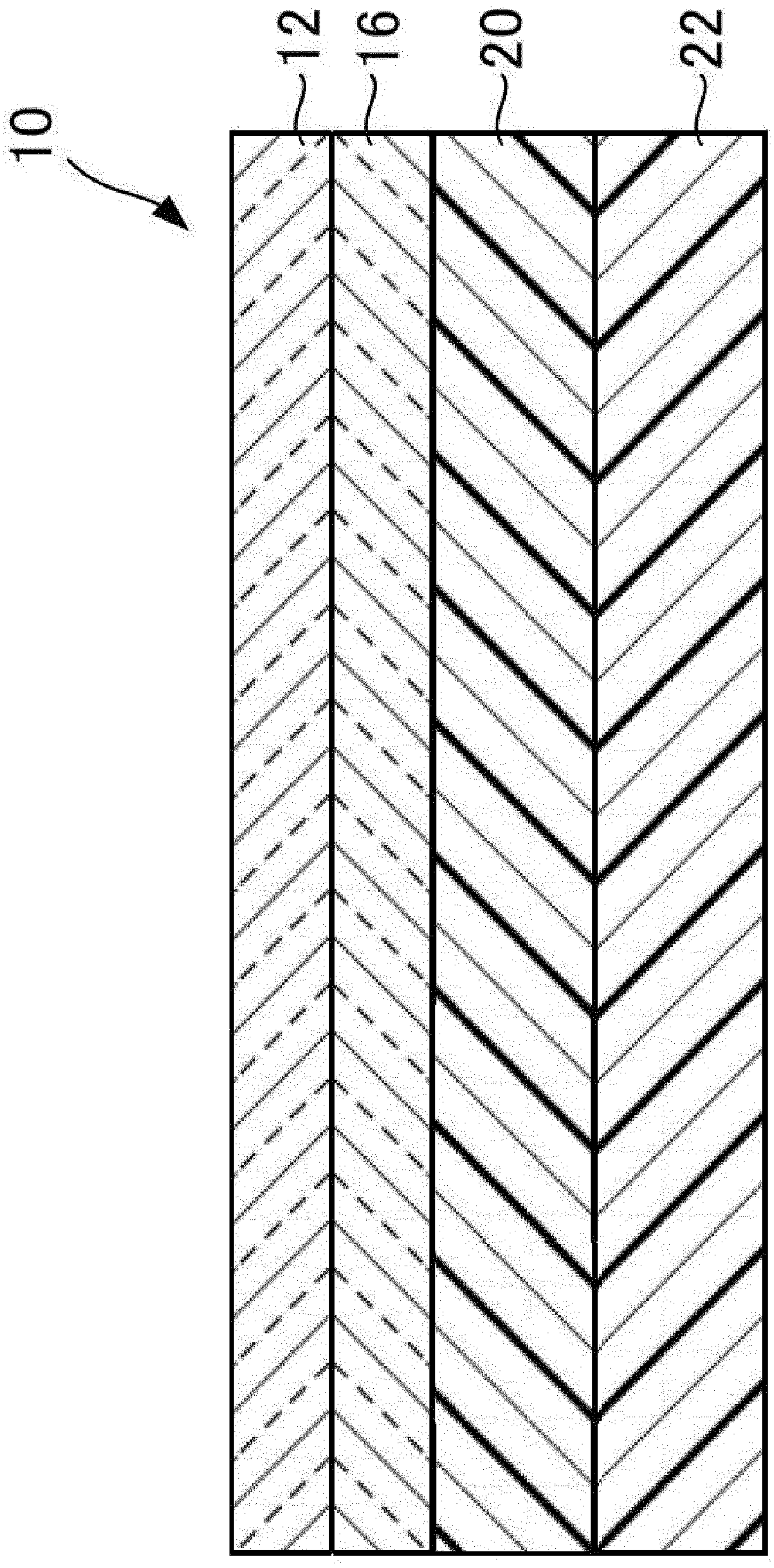

**INTERNATIONAL SEARCH REPORT**

International application No. PCT/JP2021/003819

A. CLASSIFICATION OF SUBJECT MATTER

B32B 27/30(2006.01)i; B29C 51/02(2006.01)i; B32B 27/36(2006.01)i

FI: B32B27/30 A; B32B27/36 102; B29C51/02

According to International Patent Classification (IPC) or to both national classification and IPC

B. FIELDS SEARCHED

Minimum documentation searched (classification system followed by classification symbols)

B32B1/00-43/00; B29C51/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-210755 A (NIPPON PAPER CHEMICALS CO., LTD.) 01 November 2012 (2012-11-01) claims, paragraphs [0008], [0011], [0023]-[0026], [0030], [0032], [0034]-[0036] | 1, 4-16 |
| Y | JP 2004-299384 A (NISSHA PRINTING CO., LTD.) 28 October 2004 (2004-10-28) claims, paragraphs [0014]-[0016], [0023]-[0025], [0035], [0038]-[0041] | 1, 4-16 |
| Y | JP 2000-951 A (DAINIPPON PRINTING CO., LTD.) 07 January 2000 (2000-01-07) claims, paragraphs [0008], [0011]-[0017] | 1, 4-16 |
| A | JP 2015-108093 A (MITSUBISHI CHEMICAL CORP.) 11 June 2015 (2015-06-11) claims, paragraphs [0054], [0068], [0082], [0107] | 1-16 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 14 April 2021 (14.04.2021) | 27 April 2021 (27.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/003819

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-187241 A (JSR CORPORATION) 29 October 2015 (2015-10-29) claims, paragraphs [0025]-[0026] | 1-16 |
| A | JP 2007-186678 A (BAYER MATERIALSCIENCE AG) 26 July 2007 (2007-07-26) claims, paragraphs [0009]-[0010], [0045], [0052]-[0053], [0062]-[0067] | 1-16 |

Form PCT/ISA/210 (continuation of second sheet) (January 2015)

## INTERNATIONAL SEARCH REPORT
Information on patent family members

International application No.
PCT/JP2021/003819

| Patent Documents referred in the Report | Publication Date | Patent Family | Publication Date |
|---|---|---|---|
| JP 2012-210755 A | 01 Nov. 2012 | (Family: none) | |
| JP 2004-299384 A | 28 Oct. 2004 | (Family: none) | |
| JP 2000-951 A | 07 Jan. 2000 | (Family: none) | |
| JP 2015-108093 A | 11 Jun. 2015 | (Family: none) | |
| JP 2015-187241 A | 29 Oct. 2015 | KR 10-2015-0039076 A<br>TW 201514008 A | |
| JP 2007-186678 A | 26 Jul. 2007 | US 2007/0123613 A1<br>claims, paragraphs [0012]-[0013], [0063], [0070]-[0071], [0080]-[0085]<br>US 2008/0102215 A1<br>EP 1790673 A1<br>DE 102005057245 A<br>KR 10-2007-0056984 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017508828 W
- JP 2007179018 A